# EUROPÄISCHE PATENTANMELDUNG

(11) **EP 3 851 371 A1**
(43) Veröffentlichungstag der Anmeldung: **21.07.2021**
(21) Anmeldenummer: 21150582.1
(22) Anmeldetag: 07.01.2021
(51) Int. Cl.: B64C 3/28

(54) **VORDERKANTENSTRUKTUR FÜR EINE AERODYNAMISCHE FLÄCHE EINES LUFTFAHRZEUGS**

(30) Priorität: 20.01.2020 DE 102020101195
(71) Anmelder: Airbus Operations GmbH, 21129 Hamburg (DE)
(72) Erfinder: Kuhlmann, Guido, 21129 Hamburg (DE); Schröder, René, 21129 Hamburg (DE); Rombs, Wilhelm, 21129 Hamburg (DE); Temmen, Hubert, 21129 Hamburg (DE)

(57) **Zusammenfassung**

Die vorliegende Erfindung betrifft eine Vorderkantenstruktur (23) für eine aerodynamische Fläche (5) eines Luftfahrzeugs (1) mit einem stromlinienförmig um einen Innenraum (25) gekrümmten Außenwandteil (27), welches eine zum Innenraum (25) weisende innere Oberfläche (31) und eine für Kontakt mit der äußeren Umströmung (33) vorgesehene äußere Oberfläche (35) aufweist, welches einen ersten Außenwandabschnitt (37) aufweist, der sich von einem Vorderkantenpunkt (39) in Richtung einer ersten Seite (17) konvex gekrümmt in eine Anströmrichtung (40) erstreckt, und welches einen zweiten Außenwandabschnitt (41) aufweist, der sich von dem Vorderkantenpunkt (39) in Richtung einer zweiten Seite (21) konvex gekrümmt in Anströmrichtung (40) erstreckt, und mit einem im Innenraum (25) gegenüber der inneren Oberfläche (31) des Außenwandteils (27) angeordneten Innenwandteil (43), welches sich von dem ersten Außenwandabschnitt (37) zum zweiten Außenwandabschnitt (41) erstreckt. Die Aufgabe, eine besonders einfache sowie günstig und leicht herzustellende Vorderkantenstruktur bereitzustellen, welche Vogelschläge zuverlässig tolerieren kann, wird dadurch gelöst, dass das Innenwandteil (43) eine zur inneren Oberfläche (31) des Außenwandteils (27) weisende Kante (47) aufweist.

## Beschreibung

Die vorliegende Erfindung betrifft eine Vorderkantenstruktur, insbesondere eine vogelschlagtolerante Vorderkantenstruktur, für eine aerodynamische Fläche eines Luftfahrzeugs, insbesondere für einen Flügel, ein Seitenleitwerk oder ein Höhenleitwerk eines Flugzeugs. Andere Anwendungen der Vorderkantenstruktur, wie an einem Rotorblatt beispielsweise eines Hubschraubers, sind jedoch ebenfalls denkbar und beabsichtigt. Ein weiterer Aspekt der Erfindung betrifft eine aerodynamische Fläche in Form eines Flügels, eines Seitenleitwerks oder eines Höhenleitwerks für ein Luftfahrzeug, insbesondere für ein Flugzeug, mit einer solchen Vorderkantenstruktur. Noch ein weiterer Aspekt der Erfindung betrifft ein Luftfahrzeug, insbesondere ein Flugzeug, mit einer solchen Vorderkantenstruktur oder mit einer solchen aerodynamischen Fläche.

Die Vorderkantenstruktur umfasst ein stromlinienförmig um einen Innenraum gekrümmtes Außenwandteil, welches sich in einer Spannweitenrichtung erstreckt. Das Außenwandteil weist ferner eine zum Innenraum weisende innere Oberfläche und eine für Kontakt mit der äußeren Umströmung vorgesehene äußere Oberfläche auf. Das Außenwandteil umfasst einen ersten Außenwandabschnitt, der sich von einem Vorderkantenpunkt in einer in Richtung einer ersten Seite konvex gekrümmten Weise in eine Anströmrichtung erstreckt, und einen zweiten Außenwandabschnitt, der sich von dem Vorderkantenpunkt in einer in Richtung einer zweiten Seite konvex gekrümmten Weise in Anströmrichtung erstreckt. Der Vorderkantenpunkt ist der Punkt, an dem die äußere Oberfläche des Außenwandteils senkrecht zu der Anströmrichtung der äußeren Umströmung liegt. Die Anströmrichtung bezieht sich auf die Anströmung im geraden Reiseflug unter Normalbedingungen.

Die Vorderkantenstruktur umfasst ferner ein im Innenraum gegenüber der inneren Oberfläche des Außenwandteils angeordnetes Innenwandteil, welches sich in Spannweitenrichtung erstreckt. Das Innenwandteil erstreckt sich von dem ersten Außenwandabschnitt zum zweiten Außenwandabschnitt und ist vorzugsweise mit diesem verbunden. Zwischen dem Innenwandteil und dem Außenwandteil erstreckt sich vorzugsweise ein Hohlraum.

Ähnliche Vorderkantenstrukturen sind aus dem Stand der Technik bekannt. Vorderkantenstrukturen sind diejenigen Teile von Luftfahrzeugen, welche häufig von Vogelschlägen betroffen sind und müssen daher vogelschlagtolerant ausgelegt werden. Daher ist es aus dem Stand der Technik bekannt, zur Verstärkung der Vorderkantenstruktur gegen Vogelschlag beispielsweise Sandwichstrukturen mit Wabenkern oder rippenversteifte Faserverbundbauteile einzusetzen. Solche Strukturen sind jedoch aufwändig und teuer in der Herstellung.

Daher ist es die Aufgabe der vorliegenden Erfindung, eine besonders einfache sowie günstig und leicht herzustellende Vorderkantenstruktur bereitzustellen, welche Vogelschläge zuverlässig tolerieren und die dahinterliegende Struktur ausreichend schützen kann.

Diese Aufgabe wird dadurch gelöst, dass das Innenwandteil eine zur inneren Oberfläche des Außenwandteils weisende Kante, vorzugsweise spitze und/oder keilförmige Kante, aufweist. Durch eine solche Kante am Innenwandteil kann ein Vogel, falls dieser den Außenwandteil durchschlägt, zuverlässig entlang der Kante zerteilt und/oder nach außen abgelenkt werden, so dass in diesem Fall zumindest das Innenwandteil den Vogelschlag unbeschädigt oder zumindest so wenig beschädigt übersteht, dass die dahinterliegende Struktur, insbesondere der vordere Holm bzw. der Torsionskasten, unbeschädigt bleibt und ein Weiterflug mindestens bis zum nächsten Flughaften möglich ist.

Das Außenwandteil und/oder das Innenwandteil können ferner Versteifungselemente aufweisen, die sich vorzugsweise länglich entweder in Spannweitenrichtung oder quer zur Spannweitenrichtung entlang dem Außenwandteil und/oder Innenwandteil erstrecken, vorzugsweise entlang der zum Innenraum weisenden Oberfläche des Außenwandteils und/oder Innenwandteils.

In einer bevorzugten Ausführungsform weist das Innenwandteil einen ersten Innenwandabschnitt, der sich von der Kante in Richtung der ersten Seite und in Anströmrichtung bis zum ersten Außenwandabschnitt erstreckt, und einen zweiten Innenwandabschnitt auf, der sich von der Kante in Richtung der zweiten Seite und in Anströmrichtung bis zum zweiten Außenwandabschnitt erstreckt. Auf diese Weise erhält das Innenwandteil eine Keilform, so dass Vögel, die seitlich der Kante auf das Innenwandteil aufschlagen, sowie Teile von Vögeln, die durch die Kante zerteilt wurden, durch den ersten bzw. zweiten Innenwandabschnitt seitlich zur ersten bzw. zweiten Seite hin sowie in Anströmrichtung abgelenkt werden, insbesondere an dem ersten bzw. zweiten Innenwandabschnitt abgleiten.

Dabei ist es besonders bevorzugt, wenn der erste Innenwandabschnitt von der Kante bis zum ersten Außenwandabschnitt einen geraden Verlauf hat und/oder wenn der zweite Innenwandabschnitt von der Kante bis zum zweiten Außenwandabschnitt einen geraden Verlauf hat. Auf diese Weise hat das Innenwandteil eine klassische Keilform, durch die Vögel bzw. Vogelteile besonders gut seitlich abgleiten können und die ferner einfach gefertigt werden kann und eine hohe Steifigkeit hat.

Dabei ist es ferner bevorzugt, wenn der erste Innenwandabschnitt und der zweite Innenwandabschnitt einen Winkel von zwischen 30° und 150°, vorzugsweise zwischen 60° und 120°, weiter vorzugsweise zwischen 80° und 100°, einschließen. Auf diese Weise wird eine besonders wirksame Keilform gebildet, durch die Vögel bzw. Vogelteile besonders gut seitlich abgleiten können.

In einer bevorzugten Ausführungsform hat der erste Außenwandabschnitt abgewandt vom Vorderkantenpunkt ein erstes Außenwandbefestigungsende, hat der zweite Außenwandabschnitt abgewandt vom Vorderkantenpunkt ein zweites Außenwandbefestigungsende, hat der erste Innenwandabschnitt abgewandt von der Kante ein erstes Innenwandbefestigungsende und hat der zweite Innenwandabschnitt abgewandt von der Kante ein zweites Innenwandbefestigungsende. Dabei sind vorzugsweise entweder das erste Innenwandbefestigungsende an dem ersten Außenwandabschnitt und das zweite Innenwandbefestigungsende an dem zweiten Außenwandabschnitt befestigt, vorzugsweise verschweißt, sowie das erste und zweite Außenwandbefestigungsende zur Befestigung an einem vorderen Holm, dem sogenannten "Front Spar", oder einem Torsionskasten einer aerodynamischen Fläche eingerichtet. Alternativ sind das erste Außenwandbefestigungsende an dem ersten Innenwandabschnitt und das zweite Außenwandbefestigungsende an dem zweiten Innenwandabschnitt befestigt, vorzugsweise verschweißt, möglicherweise aber auch geklebt, genietet oder verschraubt, sowie das erste und zweite Innenwandbefestigungsende zur Befestigung an dem vorderen Holm oder Torsionskasten einer aerodynamischen Fläche eingerichtet. Auf diese Weise ist entweder das Innenwandteil über das Außenwandteil oder das Außenwandteil über das Innenwandteil an dem vorderen Holm oder Torsionskasten der aerodynamischen Fläche angeschlossen. Es ist jedoch auch möglich, dass die Innen- und Außenwandteile parallel zueinander, beispielsweise direkt oder über ein Zwischenstück, an dem vorderen Holm oder Torsionskasten angeschlossen sind. Auch ist es möglich, dass die Innen- und Außenwandteile anders als über den vorderen Holm oder den Torsionskasten an der aerodynamischen Fläche angeschlossen sind.

In einer weiteren bevorzugten Ausführungsform ist die Kante derart spitz ausgebildet, dass sie einen Krümmungsradius zwischen 0,1 mm und 20 mm, vorzugsweise zwischen 0,5 mm und 10 mm, weiter vorzugsweise zwischen 1 mm und 8 mm, aufweist. Eine derart spitze Kante können auftreffende Vögel besonders gut zerteilt werden, ohne dass die Kante beschädigt wird. Letztlich sollte die Kante möglichst spitz sein, soweit dies fertigungstechnisch sinnvoll möglich ist.

In noch einer weiteren bevorzugten Ausführungsform ist die Kante in Verlängerung des Vorderkantenpunkts in Anströmrichtung angeordnet. Auf diese Weise kann die Wahrscheinlichkeit erhöht werden, dass ein Vogel im Bereich der Kante aufschlägt. In manchen Fällen, wie beispielsweise bei einem Einsatz der Vorderkantenstruktur an einem Seitenleitwerk, ist es bevorzugt, wenn die Kante mittig zwischen dem ersten und zweiten Innenwandbefestigungsende angeordnet ist, bei symmetrisch gebildeten Innenwandteilen vorzugsweise auf der Symmetrielinie.

In noch einer weiteren bevorzugten Ausführungsform sind das Außenwandteil und das Innenwandteil derart ausgebildet, insbesondere das Material und/oder die Form des Außenwandteils und des Innenwandteils derart angepasst, dass bei einem Vogelschlag vorzugsweise in Anströmrichtung eines realistisch in Betracht kommenden Vogels, insbesondere eines durchschnittlich großen und schweren Vogels, das Außenwandteil zerschlagen wird, insbesondere durchschlagen wird, und das Innenwandteil nicht zerstört wird oder nur soweit zerstört wird, dass die dahinterliegende Struktur, insbesondere der vordere Holm bzw. der Torsionskasten, nicht zerstört wird. Auf diese Weise kann bei der Zerstörung des Außenwandteils ein großer Teil der Aufprallenergie des Vogels absorbiert werden, so dass der Vogel nach Durchschlag des Außenwandteils mit einer erheblich reduzierten Energie auf das Innenwandteil prallt. Dadurch kann das Innenwandteil mit reduzierter Festigkeit bzw. Schlagfestigkeit und damit auch mit reduziertem Gewicht ausgelegt werden. Insgesamt kann auf diese Weise also das Gesamtgewicht der Vorderkantenstruktur minimiert werden, da das Außenwandteil nicht so fest ausgelegt werden muss, dass es in jedem Fall einem Vogelschlag standhält, und das Innenwandteil nur so ausgelegt werden muss, dass es einem Vogelschlag mit durch die Energieabsorption des Außenwandteils erheblich reduzierter Aufprallenergie soweit standhält, dass die dahinter liegende Struktur nicht zerstört wird. Gleichzeitig ist gewährleistet, dass in jedem Fall mindestens das Innenwandteil erhalten bleibt, da aufgrund der entsprechenden Auslegung ein Vogelschlag niemals Außen- und Innenwandteil zerstören würde.

In noch einer weiteren bevorzugten Ausführungsform ist das Innenwandteil derart ausgebildet, insbesondere das Material und/oder die Form derart angepasst, dass es eine Schlagfestigkeit aufweist, die höher ist als die Schlagfestigkeit des Außenwandteils. Es ist jedoch auch möglich, dass die Schlagfestigkeit des Außenwandteils höher ist als die Schlagfestigkeit des Innenwandteils, so dass ein möglichst großer Teil der Aufprallenergie eines Vogels bereits durch das Außenwandteil bzw. dessen Zerstörung absorbiert wird. In jedem Fall sind Außenwandteil und Innenwandteil dabei derart angepasst, dass bei einem Vogelschlag das Außenwandteil zwar zerschlagen wird, das Innenwandteil jedoch nicht zerstört wird oder nur soweit zerstört wird, dass die dahinterliegende Struktur nicht zerstört wird.

In noch einer weiteren bevorzugten Ausführungsform sind das Außenwandteil und/oder das Innenwandteil aus einem Faserverbundmaterial, vorzugsweise als ein thermoplastisches Organoblech gebildet sind. Organobleche sind vorgefertigte, insbesondere vorgelegte planare Faserverbundbleche, die unter Wärmeeinfluss vor Ort umgeformt werden können. Auf diese Weise wird ein einfacher und kostengünstiger Fertigungsprozess bereitgestellt, da die Organobleche nicht vorgefertigt bzw. vorgelegt werden müssen, sondern als vorgefertigte Massenware erhältlich sind. Vorzugsweise sind das Außenwandteil und das Innenwandteil miteinander verschweißt, was durch das thermoplastische Material der Organobleche ermöglicht ist. Alternativ zu Organoblechen können z.B. auch Metallbleche eingesetzt werden, bei denen eine Umformung vor Ort auch ohne Wärmeeinfluss möglich ist.

Ein weiterer Aspekt der vorliegenden Erfindung betrifft eine aerodynamische Fläche in Form eines Flügels, eines Seitenleitwerks oder eines Höhenleitwerks für ein Luftfahrzeug, insbesondere Flugzeug. Die aerodynamische Fläche weist einen vorderen Holm oder einen Torsionskasten, ein erstes Hautelement auf der ersten Seite, ein zweites Hautelement auf der zweiten Seite und eine Vorderkantenstruktur nach einer der zuvor beschriebenen Ausführungsformen auf. Vorzugsweise sind entweder das erste und zweite Außenwandbefestigungsende oder das erste und zweite Innenwandbefestigungsende an dem vorderen Holm oder Torsionskasten befestigt, vorzugsweise auf solche Weise, dass das erste Außenwandbefestigungsende mit dem ersten Hautelement und das zweite Außenwandbefestigungsende mit dem zweiten Hautelement fluchten oder das erste Innenwandbefestigungsende mit dem ersten Hautelement und das zweite Innenwandbefestigungsende mit dem zweiten Hautelement fluchten. Im Falle eines Seitenleitwerks kann die aerodynamische Fläche einschließlich der Vorderkantenstruktur symmetrisch ausgebildet sein. Im Falle eines Flügels oder eines Höhenleitwerks kann die Form der aerodynamischen Fläche einschließlich der Vorderkantenstruktur von einer symmetrischen Form abweichen. Die zuvor im Zusammenhang mit der Vorderkantenstruktur erläuterten Merkmale und Vorteile treffen auch auf die aerodynamische Fläche zu.

Noch ein weiterer Aspekt der vorliegenden Erfindung betrifft ein Luftfahrzeug, insbesondere ein Flugzeug, mit einer Vorderkantenstruktur nach einer der zuvor beschriebenen Ausführungsformen oder mit einer aerodynamischen Fläche nach einer der zuvor beschriebenen Ausführungsformen. Die zuvor im Zusammenhang mit der Vorderkantenstruktur und der aerodynamischen Fläche erläuterten Merkmale und Vorteile treffen auch auf das Flugzeug zu.

Ein Ausführungsbeispiel der vorliegenden Erfindung wird im Folgenden anhand einer Zeichnung näher erläutert. Die Zeichnung zeigt in
- Fig. 1: eine perspektivische Ansicht eines Flugzeugs mit einer Vorderkantenstruktur nach einem Ausführungsbeispiel der Erfindung und
- Fig. 2: eine schematische Querschnittsansicht einer Vorderkantenstruktur des Flugzeugs aus Fig. 1.

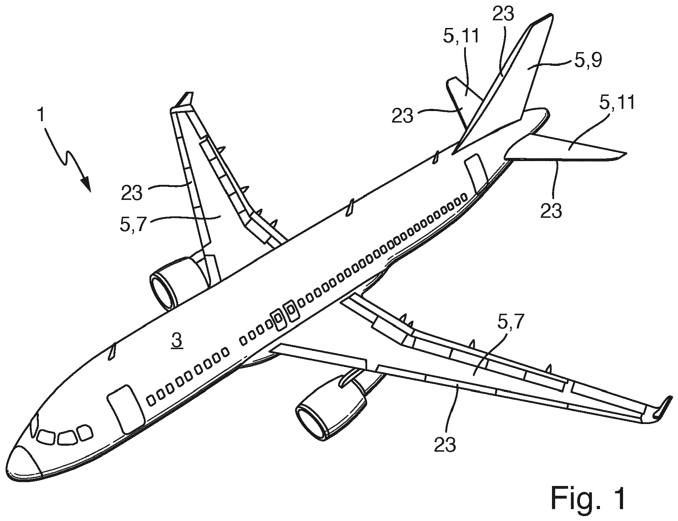

In Fig. 1 ist ein erfindungsgemäßes Luftfahrzeug 1 in Form eines Flugzeugs dargestellt. Das Luftfahrzeug 1 umfasst einen Rumpf 3 und mehrere aerodynamische Flächen 5 in Form von Flügeln 7, einem Seitenleitwerk 9 und einem Höhenleitwerk 11. Die aerodynamischen Flächen 5 in Form des Flügels 7, des Seitenleitwerks 9 und Höhenleitwerks 11 weisen einen vorderen Holm 13, ein erstes Hautelement 15 auf einer ersten Seite 17, ein zweites Hautelement 19 auf einer zweiten Seite 21 und eine Vorderkantenstruktur 23 nach einem Ausführungsbeispiel der Erfindung auf.

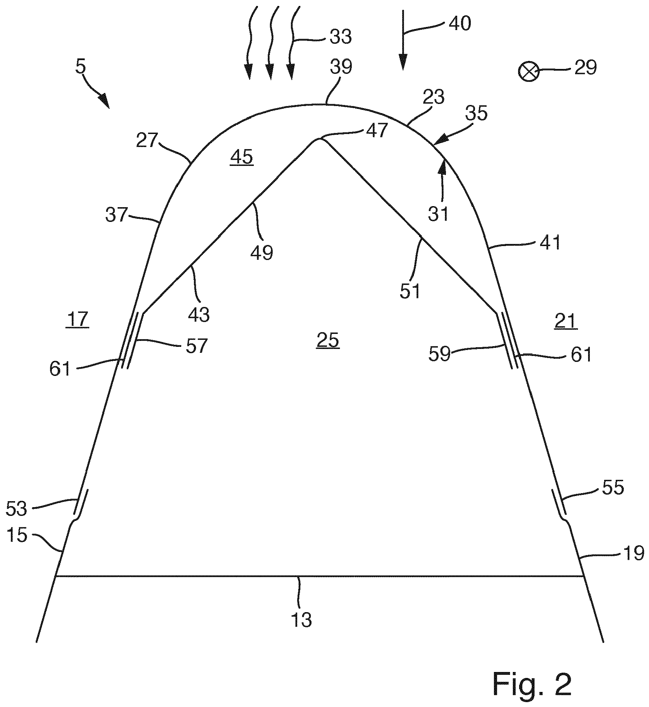

Die in Fig. 2 gezeigte Vorderkantenstruktur 23 umfasst ein stromlinienförmig um einen Innenraum 25 gekrümmtes Außenwandteil 27, welches sich in einer Spannweitenrichtung 29 erstreckt. Das Außenwandteil 27 weist ferner eine zum Innenraum 25 weisende innere Oberfläche 31 und eine für Kontakt mit einer äußeren Umströmung 33 vorgesehene äußere Oberfläche 35 auf. Das Außenwandteil 27 umfasst einen ersten Außenwandabschnitt 37, der sich von einem Vorderkantenpunkt 39 in Richtung der ersten Seite 17 konvex gekrümmt in eine Anströmrichtung 40 erstreckt, und einen zweiten Außenwandabschnitt 41, der sich von dem Vorderkantenpunkt 39 in Richtung der zweiten Seite 21 konvex gekrümmt in Anströmrichtung 40 erstreckt. Der Vorderkantenpunkt 39 ist der Punkt, an dem die äußere Oberfläche 35 des Außenwandteils 27 senkrecht zu einer Anströmrichtung 40 der äußeren Umströmung 33 liegt.

Die Vorderkantenstruktur 23 umfasst ferner ein im Innenraum 25 gegenüber der inneren Oberfläche 31 des Außenwandteils 27 angeordnetes Innenwandteil 43, welches sich in Spannweitenrichtung 29 erstreckt. Das Innenwandteil 43 erstreckt sich von dem ersten Außenwandabschnitt 37 zum zweiten Außenwandabschnitt 41 und ist mit diesen verbunden. Zwischen dem Innenwandteil 43 und dem Außenwandteil 27 ist ein Hohlraum 45 vorgesehen. Das Innenwandteil 43 weist eine zur inneren Oberfläche 31 des Außenwandteils 27 weisende spitze Kante 47 auf, durch die ein Vogel, falls dieser das Außenwandteil 27 durchschlägt, zuverlässig entlang der Kante 47 zerteilt und nach außen abgelenkt werden kann.

Das Innenwandteil 43 weist ferner einen ersten Innenwandabschnitt 49, der sich von der Kante 47 in Richtung der ersten Seite 17 und in Anströmrichtung 40 bis zum ersten Außenwandabschnitt 37 gerade erstreckt, und einen zweiten Innenwandabschnitt 51 auf, der sich von der Kante 47 in Richtung der zweiten Seite 21 und in Anströmrichtung 40 bis zum zweiten Außenwandabschnitt 41 gerade erstreckt, so dass das Innenwandteil 43 eine Keilform hat. Dabei schließen der erste Innenwandabschnitt 49 und der zweite Innenwandabschnitt 51 einen Winkel von ca. 90° ein. Die Kante 47 ist derart spitz ausgebildet, dass sie einen Krümmungsradius von ca. 5 mm aufweist. Ferner ist die Kante 47 in Verlängerung des Vorderkantenpunkts 39 in Anströmrichtung 40 angeordnet.

Der erste Außenwandabschnitt 37 hat abgewandt vom Vorderkantenpunkt 39 ein erstes Außenwandbefestigungsende 53, der zweite Außenwandabschnitt 41 hat abgewandt vom Vorderkantenpunkt 39 ein zweites Außenwandbefestigungsende 55, der erste Innenwandabschnitt 49 hat abgewandt von der Kante 47 ein erstes Innenwandbefestigungsende 57 und der zweite Innenwandabschnitt 51 hat abgewandt von der Kante 47 ein zweites Innenwandbefestigungsende 59. Dabei sind das erste Innenwandbefestigungsende 57 an dem ersten Außenwandabschnitt 37 und das zweite Innenwandbefestigungsende 59 an dem zweiten Außenwandabschnitt 41 mittels einer Schweißverbindung 61 befestigt. Gleichzeitig sind das erste und zweite Außenwandbefestigungsende 53, 55 an dem vorderen Holm 13 der aerodynamischen Fläche 5 befestigt, beispielsweise vernietet oder verschraubt.

Das Außenwandteil 27 und das Innenwandteil 43 sind derart ausgebildet, dass bei einem Vogelschlag das Außenwandteil 27 durchschlagen wird, das Innenwandteil 43 jedoch nicht zerstört wird oder nur soweit zerstört wird, dass die dahinter liegende Struktur nicht zerstört wird. Dazu ist das Innenwandteil 43 derart ausgebildet, dass es eine Schlagfestigkeit aufweist, die höher ist als die Schlagfestigkeit des Außenwandteils 27. Dabei sind das Außenwandteil 27 und das Innenwandteil 43 aus einem Faserverbundmaterial in Form eines thermoplastischen Organoblechs gebildet, durch welches die geforderte Schlagfestigkeit gut angepasst werden kann.

Das erste und das zweite Außenwandbefestigungsende 53, 55 sind derart an dem vorderen Holm 13 befestigt, dass das erste Außenwandbefestigungsende 53 mit dem ersten Hautelement 15 und das zweite Außenwandbefestigungsende 55 mit dem zweiten Hautelement 19 fluchten.

Eine solche Vorderkantenstruktur 23 kann besonders einfach und kostengünstig ausgebildet werden und weist gleichzeitig eine besonders hohe Toleranz gegenüber Vogelschlag auf, da durch den doppelwandigen Aufbau die Aufprallenergie eines Vogels durch Zerstörung des Außenwandteils 27 großenteils absorbiert wird und der mit reduzierter Energie auf das Innenwandteil 43 aufprallende Vogel das Innenwandteil 43 nicht zerstört, sondern von diesem zerteilt und seitlich abgelenkt wird.

## Patentansprüche

1. Vorderkantenstruktur (23) für eine aerodynamische Fläche (5) eines Luftfahrzeugs (1) mit
einem stromlinienförmig um einen Innenraum (25) gekrümmten Außenwandteil (27), welches eine zum Innenraum (25) weisende innere Oberfläche (31) und eine für Kontakt mit der äußeren Umströmung (33) vorgesehene äußere Oberfläche (35) aufweist, welches einen ersten Außenwandabschnitt (37) aufweist, der sich von einem Vorderkantenpunkt (39) in einer in Richtung einer ersten Seite (17) konvex gekrümmten Weise in eine Anströmrichtung (40) erstreckt, und welches einen zweiten Außenwandabschnitt (41) aufweist, der sich von dem Vorderkantenpunkt (39) in einer in Richtung einer zweiten Seite (21) konvex gekrümmten Weise in Anströmrichtung (40) erstreckt, und
einem im Innenraum (25) gegenüber der inneren Oberfläche (31) des Außenwandteils (27) angeordneten Innenwandteil (43), welches sich von dem ersten Außenwandabschnitt (37) zum zweiten Außenwandabschnitt (41) erstreckt,
**dadurch gekennzeichnet, dass**
dass das Innenwandteil (43) eine zur inneren Oberfläche (31) des Außenwandteils (27) weisende Kante (47) aufweist.

2. Vorderkantenstruktur nach Anspruch 1, wobei das Innenwandteil (43) einen ersten Innenwandabschnitt (49) aufweist, der sich von der Kante (47) in Richtung der ersten Seite (17) und in Anströmrichtung (40) bis zum ersten Außenwandabschnitt (37) erstreckt, und einen zweiten Innenwandabschnitt (51) aufweist, der sich von der Kante (47) in Richtung der zweiten Seite (21) und in Anströmrichtung (40) bis zum zweiten Außenwandabschnitt (41) erstreckt.

3. Vorderkantenstruktur nach Anspruch 2, wobei der erste Innenwandabschnitt (49) von der Kante (47) bis zum ersten Außenwandabschnitt (37) einen geraden Verlauf hat und/oder wobei der zweite Innenwandabschnitt (51) von der Kante (47) bis zum zweiten Außenwandabschnitt (41) einen geraden Verlauf hat.

4. Vorderkantenstruktur nach Anspruch 2 oder 3, wobei der erste Innenwandabschnitt (49) und der zweite Innenwandabschnitt (51) einen Winkel von zwischen 30° und 150°, vorzugsweise zwischen 60° und 120°, weiter vorzugsweise zwischen 80° und 100°, einschließen.

5. Vorderkantenstruktur nach einem der Ansprüche 2 bis 4, wobei der erste Außenwandabschnitt (37) abgewandt vom Vorderkantenpunkt (39) ein erstes Außenwandbefestigungsende (53) hat, wobei der zweite Außenwandabschnitt (41) abgewandt vom Vorderkantenpunkt (39) ein zweites Außenwandbefestigungsende (55) hat, wobei der erste Innenwandabschnitt (49) abgewandt von der Kante (47) ein erstes Innenwandbefestigungsende (57) hat, wobei der zweite Innenwandabschnitt (51) abgewandt von der Kante (47) ein zweites Innenwandbefestigungsende (59) hat, und
wobei entweder das erste Innenwandbefestigungsende (57) an dem ersten Außenwandabschnitt (37) und das zweite Innenwandbefestigungsende (59) an dem zweiten Außenwandabschnitt (41) befestigt sind und das erste und zweite Außenwandbefestigungsende (55) zur Befestigung an einem vorderen Holm (13) oder einem Torsionskasten einer aerodynamischen Fläche (5) eingerichtet sind,
oder das erste Außenwandbefestigungsende (53) an dem ersten Innenwandabschnitt (49) und das zweite Außenwandbefestigungsende (55) an dem zweiten Innenwandabschnitt (51) befestigt sind und das erste und zweite Innenwandbefestigungsende (57, 59) zur Befestigung an dem vorderen Holm (13) oder Torsionskasten der aerodynamischen Fläche (5) eingerichtet sind.

6. Vorderkantenstruktur nach einem der Ansprüche 1 bis 5, wobei die Kante (47) derart spitz ausgebildet ist, dass sie einen Krümmungsradius zwischen 0,1 mm und 20 mm, vorzugsweise zwischen 0,5 mm und 10 mm, weiter vorzugsweise zwischen 1 mm und 8 mm, aufweist.

7. Vorderkantenstruktur nach einem der Ansprüche 1 bis 6, wobei die Kante (47) in Verlängerung des Vorderkantenpunkts (39) in Anströmrichtung (40) angeordnet ist.

8. Vorderkantenstruktur nach einem der Ansprüche 1 bis 7, wobei das Außenwandteil (27) und das Innenwandteil (43) derart ausgebildet sind, dass bei einem Vogelschlag das Außenwandteil (27) zerschlagen wird und das Innenwandteil (43) nicht zerstört wird.

9. Vorderkantenstruktur nach einem der Ansprüche 1 bis 8, wobei das Innenwandteil (43) derart ausgebildet ist, dass es eine Schlagfestigkeit aufweist, die höher ist oder niedriger ist als die Schlagfestigkeit des Außenwandteils (27).

10. Vorderkantenstruktur nach einem der Ansprüche 1 bis 9, wobei das Außenwandteil (27) und/oder das Innenwandteil (43) aus einem Faserverbundmaterial, vorzugsweise als ein thermoplastisches Organoblech gebildet sind.

11. Aerodynamische Fläche (5) in Form eines Flügels (7), eines Seitenleitwerks (9) oder eines Höhenleitwerks (11) für ein Luftfahrzeug (1),
wobei die aerodynamische Fläche (5) einen vorderen Holm (13) oder einen Torsionskasten, ein erstes Hautelement (15) auf der ersten Seite (17), ein zweites Hautelement (19) auf der zweiten Seite (21) und eine Vorderkantenstruktur (23) nach einem der Ansprüche 1 bis 10 aufweist, und
wobei entweder das erste und zweite Außenwandbefestigungsende (53, 55) oder das erste und zweite Innenwandbefestigungsende (57, 59) an dem vorderen Holm (13) oder Torsionskasten befestigt sind, so dass das erste Außenwandbefestigungsende (53) mit dem ersten Hautelement (15) und das zweite Außenwandbefestigungsende (55) mit dem zweiten Hautelement (19) fluchten oder das erste Innenwandbefestigungsende (57) mit dem ersten Hautelement (15) und das zweite Innenwandbefestigungsende (59) mit dem zweiten Hautelement (19) fluchten.

12. Luftfahrzeug (1) mit einer Vorderkantenstruktur (23) nach einem der Ansprüche 1 bis 10 oder mit einer aerodynamischen Fläche (5) nach Anspruch 11.
